(19) **Europäisches Patentamt**

**European Patent Office**

**Office européen des brevets**

(11) **EP 1 209 040 B1**

(12) **EUROPÄISCHE PATENTSCHRIFT**

(45) Veröffentlichungstag und Bekanntmachung des Hinweises auf die Patenterteilung:
**27.09.2006 Patentblatt 2006/39**

(51) Int Cl.:
***B60R 21/01*** *(2006.01)*

(21) Anmeldenummer: **01125684.9**

(22) Anmeldetag: **26.10.2001**

(54) **Verfahren und System zur Ansteuerung von Zündkreisen für Rückhaltemittel**

Method and system for triggering restraint means

Méthode et système pour la commande du déclenchement d'un moyen de retenue

(84) Benannte Vertragsstaaten:
**DE FR GB SE**

(30) Priorität: **21.11.2000 DE 10057917**

(43) Veröffentlichungstag der Anmeldung:
**29.05.2002 Patentblatt 2002/22**

(73) Patentinhaber: **ROBERT BOSCH GMBH**
**70442 Stuttgart (DE)**

(72) Erfinder:
• **Otterbach, Jens**
**57482 Wenden (DE)**
• **Schumacher, Hartmut**
**71691 Freiberg (DE)**
• **Taufer, Peter**
**71272 Renningen (DE)**
• **Rupp, Andreas**
**72770 Reutlingen (DE)**
• **Henne, Achim**
**74343 Sachsenheim (DE)**
• **Tschentscher, Harald**
**71723 Grossbottwar (DE)**
• **Ulmer, Michael**
**72116 Moessingen (DE)**

(56) Entgegenhaltungen:
EP-A- 0 997 349        WO-A-98/37488
DE-A- 4 304 847        DE-A- 19 740 021

EP 1 209 040 B1

**Beschreibung**

Stand der Technik

Die Erfindung geht aus von einer Vorrichtung bzw. einem Verfahren zur Ansteuerung von Zündkreisen für Rückhaltemittel nach der Gattung der unabhängigen Patentansprüche.

Bei Airbags werden bereits integrierte Schaltkreise zur Zündkreisansteuerung verwendet, wobei einzelne Bits in einem Zündbefehl einzelne Transistoren in Endstufen ansteuern. Nicht erkannte Zündbefehle werden ignoriert und es erfolgt keine Reaktion.

Das Dokument EP 0 997 349 A zeigt den Oberbegriff des Anspruchs 1.

Vorteile der Erfindung

Die erfindungsgemäße Vorrichtung bzw. das erfindungsgemäße Verfahren zur Ansteuerung von Zündkreisen für Rückhaltemittel mit den Merkmalen der unabhängigen Patentansprüche haben demgegenüber den Vorteil, dass durch die Verwendung von einer Bitkombination jeder ansteuerbare Transistor eindeutig identifiziert wird, so dass durch einen Bitfehler keine falschen Signale irrtümlich erzeugt werden. Bei einem Bitfehler wird die Fehlererkennung der Zündkreisansteuerung dies erkennen und dem Prozessor melden. Weiterhin ist es von Vorteil, dass durch die vorhandenen Sperreingänge für die Plus- und Minusendstufen und die entsprechenden Entsperrbefehle ein fehlerhafter Prozessor nicht alle Endstufen freigeben kann. Darüber hinaus ist es von Vorteil, dass nun der Zündstrom eindeutig meßbar ist, so dass dadurch eine Aufzeichnung über die Funktionsfähigkeit der Rückhaltemittel möglich ist. Auch die Umschaltung zwischen einem Puls- oder Dauerbetrieb der Endstufen führt zu einer höheren Zündgeschwindigkeit bzw. einem höheren Zündwirkungsgrad.

Durch die in den abhängigen Ansprüchen aufgeführten Maßnahmen und Weiterbildungen sind vorteilhafte Verbesserungen der bzw. des in den unabhängigen Patentansprüchen angegebenen Vorrichtung bzw. Verfahrens zur Ansteuerung von Zündkreisen für Rückhaltemittel möglich.

Besonders vorteilhaft ist, dass die Mittel zur Messung der Zündströme einen Strom einer Referenzstromquelle verbunden mit der Einregelinformation auf einen vorgegebenen Sollstrom in einer jeweiligen Plusendstufe erfassen und das entsprechende Meßergebnis in einem Zündstromregister ablegen, so dass dieses Meßergebnis dann an einen Crashrekorder übertragbar ist. Die Stromquelle ist beispielsweise ein Stromspiegel in der Plusendstufe. Die Aufzeichnung der Aktivität der Zündkreise ist in Rechtsstreitigkeiten als Beweis von Vorteil. Weiterhin ist das Messen des Zündstroms für die Bestimmung der Zündenergie von Vorteil, da, wenn der minimale Zündstrom bekannt ist, die minimale Zündenergie aus diesem Zündstrom, dem Widerstand des Zündkreises und der Zündzeit berechnet werden kann. Damit ist dann ein intelligentes Energiemanagement möglich, um die Endstufentransistoren zum Zünden des Zündmittels sofort abzuschalten, wenn es nicht mehr notwendig ist, d.h. wenn die minimale Zündenergie bereits erreicht wird. Daher kann dann auch ein kleinerer Kondensator als Energiespeicher für die Energiereserve verwendet werden.

Darüber hinaus ist es von Vorteil, dass die Zündkreisansteuerung eine Fehlermeldung an den Prozessor sendet, wenn eine falsche Bitkombination empfangen wurde, die keinen Transistor ansteuert, so dass der Prozessor entsprechend reagieren kann und seine eigene Funktionsfähigkeit überprüfen kann. Dies erhöht die Sicherheit des Gesamtsystems.

Es ist weiterhin von Vorteil, dass eine Umschaltung zwischen Puls- und Dauerbetrieb der Endstufen in Abhängigkeit von der Energiereservespannung durchgeführt wird, wobei bei hohen Spannungen eine Hochstromzündung durchgeführt wird und zwar mittels Pulsbetrieb, wobei dies den Zündwirkungsgrad und die Zündgeschwindigkeit erhöht. Der Zündwirkungsgrad steigt auf Grund der höheren Spannung am Zündmittel, hervorgerufen durch die Hochstromzündung - bei gleichzeitig kleinerem Spannungsabfall an der Endstufe. Bei den heute eingesetzten pyrotechnischen Zündmitteln nimmt die Auslösezeit mit steigendem Zündstrom rapide ab, wodurch die Zündgeschwindigkeit gesteigert wird. Mittels des Pulsbetriebs wird die Plusendstufe zu dem Kurzschluß fest gegen Kurzschlüsse nach Masse, da durch das Pulsen am Endstufentransistor nur eine begrenzte Leistung entsteht, die kleiner als die maximal zulässige ist. Darüber hinaus sind im Pulsbetrieb höhere Zündströme ohne eine thermische Überlastung der Plusendstufe möglich. Zudem kann die Fläche der Plusendstufe auf einem integrierten Schaltkreis verkleinert werden.

Zeichnung

Ausführungsbeispiele der Erfindung sind in der Zeichnung dargestellt und werden in der nachfolgenden Beschreibung näher erläutert. Es zeigt Figur 1 ein Blockschaltbild der erfindungsgemäßen Vorrichtung, Figur 2 ein Blockschaltbild der Zündkreisansteuerung und Figur 3 ein Flußdiagramm des erfindungsgemäßen Verfahrens.

Beschreibung

Airbags werden zunehmend in Kraftfahrzeugen in höherer Anzahl und mit erhöhter Intelligenz eingesetzt. Die Zündung von Airbags wird durch eine Zündkreisansteuerung realisiert, die üblicherweise auf einem integrierten Schaltkreis vorhanden ist. Die Aufgabe der Zündkreisansteuerung ist, die Transistoren der Endstufen korrekt anzusteuern und zwar in Abhängigkeit von Zündbefehlen, die von einem Prozessor des Airbagsteuergeräts kommen, den Zündstrom zu überwachen und die Energie, die zur Zündung bereitsteht, optimal zu verwalten.

Erfindungsgemäß wird daher eine Vorrichtung bzw. ein Verfahren zur Ansteuerung von Zündkreisen für Rückhaltemittel vorgeschlagen, wobei die Vorrichtung entsprechende Mittel aufweist, um diese Aufgaben zu lösen und bei dem Verfahren insbesondere eine Bitkombination zur Ansteuerung von den einzelnen Transistoren eingesetzt wird, wobei die Bitkombination bei einem Bitfehler keinen anderen Transistor ansteuern wird, so dass es zu keiner fehlerhaften Aktivierung einer Endstufe kommen wird, denn ein Bitfehler einer zulässigen Bitkombination führt automatisch zu einer unzulässigen Bitkombination.

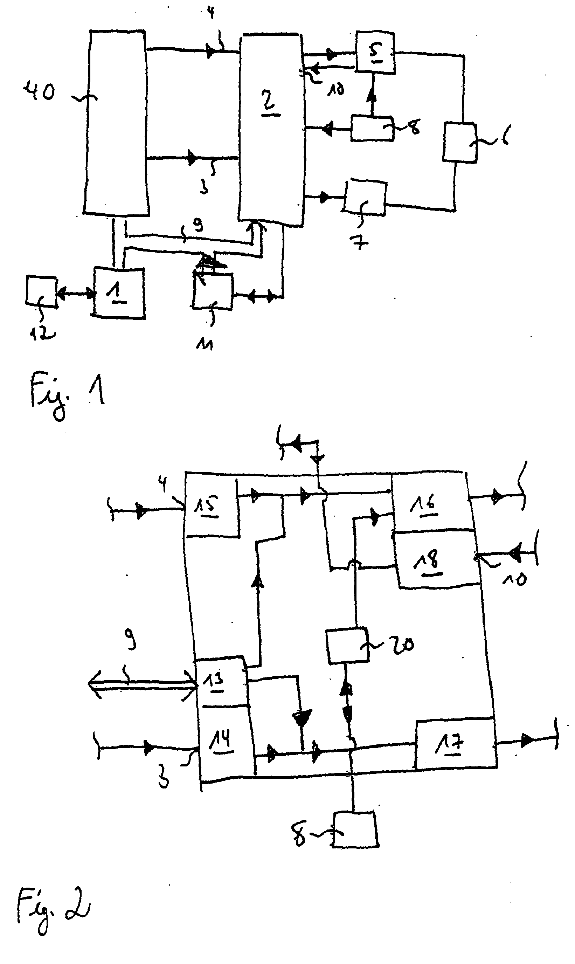

In Figur 1 ist als Blockschaltbild die erfindungsgemäße Vorrichtung dargestellt. Ein Prozessor 1 eines Airbagsteuergeräts ist über einen ersten Datenein-/-ausgang mit einer Zündkreisansteuerung 2, einem Sicherheits-IC (Integrated Circuit = Integrierte Schaltung) 40 sowie einem Zündstromregister 11 verbunden. Die Zündkreisansteuerung 2 stellt selbst eine integrierte Schaltung dar, also einen IC. Über einen zweiten Datenein-/-ausgang ist der Prozessor 1 mit dem Zündstromregister 11 verbunden. Über einen ersten Datenausgang ist der Sicherheits-IC 40 an einen ersten Sperreingang der Zündstromansteuerung 2 angeschlossen, wobei dieser erste Sperreingang zur Sperrung von Minusendstufen von Zündkreisen verwendet wird.

Über einen zweiten Datenausgang ist der Sicherheits-IC 40 an einen zweiten Sperreingang der Zündkreisansteuerung 2 angeschlossen, wobei dieser zweite Sperreingang zur Sperrung von Plusendstufen der Zündkreise verwendet wird. Eine Plusendstufe 5 ist zur Spannungsversorgung an eine Energiereserve 8 angeschlossen, die im Wesentlichen wenigstens einen Kondensator zur Energiespeicherung aufweist. Diese Energiereserve 8 wird zur Zündung von an die Endstufen 5 und 7 angeschlossenen Zündmitteln verwendet. Zudem ist die Energiereserve 8 zur Erfassung der Energiereservespannung mit der Zündkreisansteuerung 2 verbunden. Über einen ersten Ausgang ist die Zündkreisansteuerung 2 an eine Minusendstufe 7 angeschlossen. Über einen zweiten Ausgang ist die Zündkreisansteuerung 2 an eine Plusendstufe 5 angeschlossen. Über einen Eingang ist die Zündkreisansteuerung 2 mit der Plusendstufe 5 verbunden. Auf der anderen Seite der Plusendstufe 5 ist ein Zündmittel 6 angeschlossen, das ebenfalls auf der anderen Seite der Minusendstufe 7 angeschlossen ist. Die Plusendstufe 5 weist eine Strombegrenzung auf, während die Minusendstufe 7 dies nicht hat. Über einen zweiten Datenein-/-ausgang ist die Zündkreisansteuerung 2 an einen zweiten Datenein-/-ausgang des Zündstromregisters 11 angeschlossen. Der Crashrekorder 12 wird vom Prozessor 1 beschrieben. Hier liegt nur eine Plus- beziehungsweise Minusendstufe vor, es ist jedoch möglich, mehrere Paare von Plus- und Minusendstufen vorzusehen, sofern entsprechend mehr Zündkreise vorliegen.

Unter Zündmitteln wird hier insbesondere eine Zündpille verstanden.

Der Sicherheits-IC 40 und der Prozessor 1, die sich in einem Steuergerät des Airbags befinden, sind über hier nicht dargestellte Datenverbindungen mit Sensoren verbunden, um einen Auslösefall für die Rückhaltemittel unabhängig voneinander zu erkennen. Solche Sensoren sind beispielsweise Beschleunigungssensoren oder Drucksensoren bei der Seitenaufprallsensierung. Der Sicherheits-IC 40 erfüllt die Funktion einer Plausibilitätsüberprüfung der Sensorwerte und erkennt mittels Daten in eigener Hardware, ob ein Auslösefall vorliegt oder nicht. Bei einem Auslösefall gibt der Sicherheits-IC 40 die Endstufen frei. Der Sicherheits-IC 40 ist daher wie ein Sicherheitsschalter, der aber auf Sensorwerte aus allen Richtungen reagiert.

Im Auslösefall sind dann die Airbags als Rückhaltemittel zu zünden. Dann überträgt der Prozessor 1 über die Datenverbindung 9 an die Zündkreisansteuerung 2 einen Zündbefehl, der verschiedene Transistoren der Endstufen 5 und 7 ansteuert. Zunächst muß jedoch der Sicherheits-IC 40 die Sperreingänge (Disable-Eingänge) 3 und 4 mit entsprechenden Entsperrbefehlen setzen, so dass die Endstufen 5 und 7 jeweils freigegeben sind. Dann überträgt der Prozessor 1 den Zündbefehl mit der Ansteuerung für die Transistoren. Beispielsweise werden folgende Bitkombinationen verwendet. Die Bitkombination 01 bedeutet, dass ein Endstufentransistor eingeschaltet wird und die Bitkombination 10, dass der entsprechende Endstufentransistor ausgeschaltet wird. Die Bitkombinationen 00 und 11 sind nicht zulässig. Der Befehl wird dann entsprechend abgewiesen. Die Zündkreisansteuerung 2 wird dann im Folgenden ein Fehlerbit setzen, um den Prozessor 1, der hier ein Mikrocontroller ist, diesen Fehler zu signalisieren. Durch die Verwendung dieser Bitkombinationen ist es klar, dass bei einem auftretenden Bitfehler ein nicht zulässiger Befehl aus den Bitkombinationen 01 und 10 wird. Der Fehler wird also erkannt. Beide Bits müssen für die Bitkombination 01 und 10 fehlerhaft sein, um zu einer falschen Reaktion zu führen. Verwendet man hierbei eine Datenbreite von 8 Bit, sind damit vier Transistoren der Endstufen durch die vier Bitpaare ansteuerbar. Die Bitpaare sind dann den Transistoren fest zugeordnet. Dafür ist dann die Datenleitung 9 entsprechend ausgebildet.

Die Zündkreisansteuerung 2 steuert dann entsprechend die Transistoren der Plusendstufe 5 und der Minusendstufe 7 an. Beispielhaft sind hier nur jeweils eine Plus- und Minusendstufe angeschlossen. Es sind jedoch erheblich mehr Plus- und Minusendstufen und damit auch Zündkreise anschließbar. Die Zündkreisansteuerung 2 erfasst dann über den Dateneingang 10 einen Referenzstrom eines Stromspiegels in der Plusendstufe 5 und die Einregelinformation der Plusendstufe 5 auf Sollstrom. Die Einregelinformation ist ein digitales Signal, beispielsweise ein Bit oder eine Bitkombination, die anzeigt, dass ein vorgegebener Schwellenstrom erreicht wurde. Beide Größen, der Referenzstrom und die Einregelinformation, werden logisch miteinander verknüpft, um den Zündstrom abzuschätzen. Hier wird als logische Verknüpfung eine UND-Verknüpfung gewählt. Der Stromspiegel wird hier beispielhaft als geregelte Stromquelle verwendet. Erreicht dieser Zündstrom einen minimalen vorgegebenen Schwellenwert, dann setzt die Zündkreisansteuerung 2 das Zündstromregister 11. Dieses Zündstromregister 11 wird von dem Prozessor 1 zyklisch ausgelesen und der Inhalt im Crashrekorder 12 dauerhaft gespeichert. Dies ist für spätere Rechtsstreitigkeiten von Interesse, um die Funktionalität des Rückhaltesystems nachzuweisen. Mit dem minimalen Zündstrom ist es weiterhin möglich, die Zündenergie abzuschätzen. Die Zündenergie wird nach folgender Formel berechnet:

$$\text{Energie} = I_{min} * I_{min} * \text{Zündkreiswiderstand} * \text{Zündzeit}$$

Damit kann nach Erreichen der zur Zündung notwendigen Zündenergie die Endstufe von der Software abgeschaltet werden, um den Energiereservekondensator in der Energiereserve 8 nicht unnötig zu entladen.

In Abhängigkeit von der Energiereservespannung in der Energiereserve 8 werden die vorhandenen Plusendstufen entweder gepulst oder im Dauerbetrieb angesteuert. Wird eine vorgegebene Spannungsschwelle für die Energiereservespannung überschritten, erfolgt der wirkungsgradoptimierte Pulsbetrieb, d.h. die Plusendstufe 5 wird automatisch mit einem fest vorgegebenen Puls-Pausenverhältnis ein- und ausgeschaltet. Liegt die Spannung darunter, wird der Dauerbetrieb eingesetzt. Die Umschaltung erfolgt automatisch. Ein einmal gewählter Zündmode, also entweder Pulsbetrieb oder Dauerbetrieb, bleibt für die Dauer der Zündung erhalten unabhängig vom weiteren Verlauf der Energiereservespannung. Mittels des Pulsbetriebs wird die Plusendstufe 5 kurzschlußfest gegen Kurzschlüsse nach Masse. Zudem sind im Pulsbetrieb höhere Zündströme ohne thermische Überlastung der Plusendstufe 5 möglich.

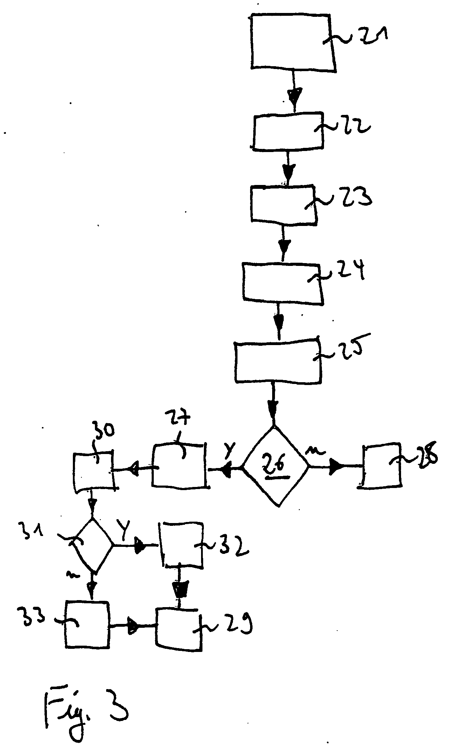

In Figur 2 ist die Zündkreisansteuerung 2 als Blockschaltbild detailliert dargestellt. An den Sperreingängen 3 und 4 sind jeweils auf dem IC der Zündkreisansteurung 2 logische Schaltkreise vorhanden, die eine Freigabe bzw. eine Sperrung der Plus- 5 bzw. Minusendstufen 7 veranlassen. Dazu ist der Funktionsblock 15 mit einem Funktionsblock 16, der die Ansteuerung der Plusendstufe durchführt, verbunden. Der Funktionsblock 14 ist hingegen mit dem Funktionblock 17 verbunden, der die Ansteuerung der Minusendstufe durchführt. Die Funktionsblöcke 16 und 17 verarbeiten dann entsprechend die Entsperr-(Unlock)Befehle.

Ein Funktionsblock 13 ist an die Datenverbindung 9 angeschlossen, über die die Ansteuerbefehle übertragen werden. Hier werden die Ansteuerbefehle über das sogenannte Serial Peripherial Interface (SPI) übertragen, wobei diese Übertragung in sogenannten SPI-Datenrahmen geordnet ist. Der Funktionsblock 13 wertet aus, ob die erhaltenen Ansteuerbitkombinationen zulässig sind oder nicht. Tritt ein unzulässiger Wert auf, wird dies im nächsten SPI-Datenrahmen durch Setzen eines Fehlerbits dem Prozessor 1 mitgeteilt. Der Funktionsblock 13 ist daher über einen ersten Datenausgang an den Funktionsblock 16 angeschlossen und über einen zweiten Datenausgang an den Funktionblock 17, um die entsprechende Ansteuerung der Transistoren der Plus- und Minusendstufen 5 und 7 zu veranlassen. Ein Funktionsblock 18, an den Daten über den Eingang 10 übertragen werden führt die oben beschriebene Zündstromerfassung durch die Messung eines Referenzstroms in einer geregelten Stromquelle, hier ein Stromspiegel, der Plusendstufe durch. Zudem wird die Einregelinformation der Plusendstufe auf Sollstrom logisch mit dem Vorhandensein des Referenzstroms verknüpft. Überschreitet dieser Zündstrom einen minimalen Sollstrom, überträgt der Funktionsblock 18 dieses Ergebnis an das Zündstromregister 11, um dort ein entsprechendes Bit bei Überschreiten des minimalen Zündstroms zu setzen. Mit dem minimalen Zündstrom kann die Zündenergie berechnet werden, um dann mit dem Prozessor 1 die Endstufen abzuschalten, um Energie zu sparen.

Ein Funktionsblock 20 ist mit der Energiereserve 8 verbunden, um die Energiereservespannung der Energiereserve 8 zu messen. Liegt diese Energiereservespannung über einem vorgegebenen Wert, dann schaltet der Funktionsblock 20, der über eine Datenverbindung mit dem Funktionsblock 16 verbunden ist, den Funktionsblock 16 so, dass ein Pulsbetrieb der Plusendstufen vorliegt. Dieser Pulsbetrieb ist wirkungsgradoptimiert und erlaubt höhere Zündströme, ohne eine thermische Überlastung der Plusendstufe hervorzurufen.

In Figur 3 ist als Flußdiagramm das erfindungsgemäße Verfahren dargestellt. In Verfahrensschritt 21 hat der Sicherheits-IC 40 und der Prozessor 1 anhand von Sensorwerten erkannt, dass die Rückhaltesysteme zu zünden sind und einen Zündbefehl an die Zündkreisansteuerung 2 zu senden hat. In Verfahrensschritt 22 wird festgestellt, welche Endstufen anzusteuern sind. In Verfahrensschritt 23 beginnt dann die Ansteuerung der jeweiligen Endstufen. Dazu werden zunächst die Sperreingänge 3 und 4 vom Sicherheits-IC 40 auf ein niedriges Potential gesetzt. Im Verfahrensschritt 24 gibt der Prozessor 1 mit zwei Entsperrbefehlen die Plus- und Minusendstufe 5 und 7 frei. In Verfahrensschritt

werden dann über die Datenverbindung 9 die Ansteuerbefehle, die durch die oben dargestellten Bitkombinationen realisiert sind, an die Zündkreisansteuerung 2 übertragen. Eine Ansteuerung der Endstufen 5 und 7 ist nur bei Einhaltung dieser Reihenfolge möglich, ansonsten werden die Endstufen 5 und 7 wieder automatisch gesperrt.

In Verfahrensschritt 26 überprüft der Funktionsblock 13, ob die Bitkombinationen zulässig sind oder nicht. Sind die Bitkombinationen zulässig, dann wird in Verfahrensschritt 27 über die Funktionsblöcke 16 und 17 eine Ansteuerung der Endstufen vorgenommen. Waren die Bitkombinationen nicht zulässig, dann wird im Verfahrensschritt 28 über die Datenverbindung 9 dem Prozessor 1 mitgeteilt, dass die Ansteuerbefehle fehlerhaft sind. In Verfahrensschritt 29, der auf Verfahrensschritt 32 oder 33 folgt, wird dann von dem Funktionsblock 18 das Fließen des minimalen Zündstroms in der Plusendstufe 5 festgestellt. Das Resultat wird dann von dem Funktionsblock 18 in das Zündstromregister 11 übertragen. Aus dem Zündstrom ist die Zündenergie ermittelbar. Sobald die Zündenergie einen minimalen Wert erreicht, wird die Plusendstufe 5 und die Minusendstufe 7 vom Prozessor 1 abgeschaltet, um Energie zu sparen. Darüber hinaus wird die Spannung der Energiereserve 8 überprüft. Dies wird in Verfahrensschritt 30 durchgeführt. Liegt die Spannung der Energiereserve über einem vorgegebenen Wert, dann schaltet der Funktionsblock 20 den Funktionsblock 16 derart, dass die Plusendstufe 5 im Pulsbetrieb betrieben wird. Dies wir in Verfahrensschritt 31 überprüft, um dann gegebenenfalls in Verfahrensschritt 32 den Pulsbetrieb einzusetzen und in dem Falle, dass die Spannung unter der vorgegebenen Schwelle liegt, in Verfahrensschritt 33 den Dauerbetrieb zu verwenden.

**Patentansprüche**

1.  Vorrichtung zur Ansteuerung von Zündkreisen für Rückhaltemittel in einem Kraftfahrzeug, wobei die Vorrichtung einen Prozessor (1), eine Zündkreisansteuerung (2) und Endstufen (5, 7) für jedes Zündmittel (6) aufweist, wobei die Zündkreisansteuerung (2) Mittel (13) zur Auswertung von Ansteuerbefehlen und Mittel (16, 17) zum Betrieb der Endstufen (5, 7) aufweist, wobei eine Energiereserve (8) für den Betrieb der Zündkreise (6), die die Endstufen (5, 7) und die Zündmittel (6) aufweisen, vorhanden ist, wobei der Prozessor (1) bei einem Aufprall des Kraftfahrzeugs die Endstufen (5, 7) zur Auslösung der Rückhaltemittel freigibt, **dadurch gekennzeichnet, dass** ein Sicherheits-IC (40) zur Freigabe der Endstufen (5, 7) bei einem Aufprall vorhanden ist, wobei der Sicherheits-IC (40) Mittel zur Aufprallerkennung aufweist, dass die Zündkreisansteuerung (2) Mittel (18) zur Messung der Zündströme, Mittel (13) zur Fehlerbehandlung von Ansteuerbefehlen, Mittel (20) zur Messung der Energiereservespannung und zur Umschaltung zwischen Puls- und Dauerbetrieb für die Endstufen (5, 7) und jeweils einen Sperreingang (3, 4) zur Freigabe für die Endstufen (5, 7) aufweist, wobei nach dem Einschalten der Vorrichtung der Sicherheits-IC (40) die Sperreingänge (3, 4) setzt.

2.  Vorrichtung nach Anspruch 1, **dadurch gekennzeichnet, dass** die Mittel (18) zur Messung der Zündströme einen Strom einer Stromquelle in einer jeweiligen Plusendstufe (5) erfassen und ein Meßergebnis in einem Zündstromregister (11) ablegen, wobei das Meßergebnis dann an einen Crashrekorder (12) übertragbar ist.

3.  Vorrichtung nach Anspruch 2, **dadurch gekennzeichnet, dass** die Mittel (18) zur Messung der Zündströme einen Referenestrom einer geregelten Stromquelle der Endstufe (5) und eine Einregelinformation logisch verknüpfen, um festzustellen, ob der Zündstrom vorhanden ist.

4.  Vorrichtung nach Anspruch 1, 2 oder 3, **dadurch gekennzeichnet, dass** die Mittel (13) zur Fehlerbehandlung der Ansteuerbefehle derart ausgebildet sind, dass sie bei einem als falsch erkannten Ansteuerbefehl eine Fehlermeldung an den Prozessor (1) übertragen.

5.  Vorrichtung nach Anspruch 3 oder 4, **dadurch gekennzeichnet, dass** der Prozessor (1) zur Zündenergieerfassung das Meßergebnis aus dem Zündstromregister (11) zur Ermittlung der Zündenergie verwendet und dass der Prozessor (1) mittels der Zündkreisansteuerung (2) bei Erreichen eines vorgegebenen Werts für die Zündenergie die Endstufen (5, 7) abschaltet.

6.  Vorrichtung nach einem der vorhergehenden Ansprüche, **dadurch gekennzeichnet, dass** die Mittel (20) zur Umschaltung zwischen Puls- und Dauerbetrieb die Spannung der Energiereserve (8) erfassen und mit einem Schwellwert vergleichen und dass die Mittel zur Umschaltung zwischen Puls- und Dauerbetrieb auf Pulsbetriaeb bei einem überschreiten des Schwellwerts und sonst auf Dauerbetrieb schalten.

7.  Vorrichtung nach einem der vorhergehenden Ansprüche, **dadurch gekennzeichnet, dass** der Sicherheits-IC (1) durch Setzen der Sperreingänge (3, 4) die Endstufen (5, 7) sperrt.

8. Verfahren zur Ansteuerung von Zündkreisen für Rückhaltemittel, wobei Endstufen (5, 7) Transistoren aufweisen, wobei die Zündkreise von einem Prozessor (1) über eine Zündkreisansteuerung (2) angesteuert werden, **dadurch gekennzeichnet, dass** zur Ansteuerung von dem Prozessor (1) wenigstens zwei Bits als eine Bitkombination zur Ansteuerung eines Transistors verwendet werden und dass bei einer unzulässigen Bitkombination dem Prozessor (1) von der Zündkreisansteuerung (2) eine Fehlermeldung signalisiert wird, wobei
eine Endstufe (5, 7) aktiviert wird, indem folgende Reihenfolge abgearbeitet wird: zuerst werden Sperreingänge (3, 4) der Zündkreisansteuerung (2) für Endstufen (5, 7) vom Sicherheits-IC (40) auf einen vorgegebenen Spannungspegel gelegt, dann wird vom Prozessor (1) ein Freigabebefehl jeweils für den Funktionsblock (16, 17) gesendet, schließlich erhält die Zündkreisansteuerung (2) von dem Prozessor (1) die Bitkombination zur Ansteuerung der Endstufen (5, 7).

9. Verfahren nach Anspruch 8, **dadurch gekennzeichnet, dass,** wenn die Reihenfolge nicht eingehalten wird, ein automatischer Abbruch der Aktivierung der Endstufen (5, 7) erfolgt.

## Claims

1. Device for driving firing circuits for restraint means in a motor vehicle, the device having a processor (1), a firing circuit driving system (2) and output stages (5, 7) for each firing means (6), the firing circuit driving system (2) having means (13) for evaluating driving commands and means (16, 17) for operating the output stages (5, 7), an energy reserve (8) for operating the firing circuits (6) which have the output stages (5, 7) and the firing means (6) being provided, the processor (1) enabling the output stages (5, 7) to trigger the restraint means when the motor vehicle is involved in an impact, **characterized in that** a safety IC (40) for enabling the output stages (5, 7) in the event of an impact is provided, the safety IC (40) having means for detecting an impact, **in that** the firing circuit driving system (2) has means (18) for measuring the firing currents, means (13) for fault recovery of driving commands, means (20) for measuring the energy reserve voltage and for switching over between the pulsed operating mode and the continuous operating mode for the output stages (5, 7) and in each case a disabling input (3, 4) for the enabling of the output stages (5, 7), the disabling inputs (3, 4) being set after the device of the safety IC (40) has been switched on.

2. Device according to Claim 1, **characterized in that** the means (18) for measuring the firing currents sense a current of a current source in a respective positive output stage (5) and store a measurement result in a firing current register (11), it then being possible to transmit the measurement result to a crash recorder (12).

3. Device according to Claim 2, **characterized in that** the means (18) for measuring the firing currents logically combine a reference current of a controlled current source of the output stage (5) and a switch-on information item in order to determine whether the firing current is present.

4. Device according to Claim 1, 2 or 3, **characterized in that** the means (13) for fault recovery of the driving commands are embodied in such a way that, in the event of driving command detected as being incorrect, they transmit a fault message to the processor (1).

5. Device according to Claim 3 or 4, **characterized in that** the processor (1) for sensing the firing energy uses the measurement result from the firing current register (11) for determining the firing energy, and **in that** the processor (1) switches off the output stages (5, 7) by means of the firing current driving system (2) when a predefined value for the firing energy is reached.

6. Device according to one of the preceding claims, **characterized in that** the means (20) for switching over between the pulsed operating mode and the continuous operating mode sense the voltage of the energy reserve (8) and compare it with a threshold value, and **in that** the means for switching over between the pulsed operating mode and the continuous operating mode switch to the pulsed operating mode when the threshold value is exceeded, and otherwise switch to the continuous operating mode.

7. Device according to one of the preceding claims, **characterized in that** the safety IC (1) disables the output stages (5, 7) by setting the disabling inputs (3, 4) .

8. Method for driving firing circuits for restraint means, output stages (5, 7) having transistors, the firing circuits being actuated by a processor (1) by means of a firing circuit driving system (2), **characterized in that**, in order for the processor (1) to perform the driving function, at least two bits are used as a bit combination for driving a transistor, and **in that** if there is an unacceptable bit combination a fault message is signalled to the processor (1) by the firing circuit driving system (2),

an output stage (5, 7) being activated by processing the following sequence: at first disabling inputs (3, 4) of the firing circuit driving system (2) for output stages (5, 7) are placed at a predefined voltage level by the safety IC (40), and an enabling command is respectively transmitted for the function block (16, 17) by the processor (1), and finally the firing circuit driving system (2) receives, from the processor (1), the bit combination for driving the output stages (5, 7).

9.  Method according to Claim 8, **characterized in that** if the sequence is not complied with, an automatic termination of the activation of the output stages (5, 7) takes place.


**Revendications**

1.  Dispositif de commande de circuits de déclenchement des moyens de retenue dans un véhicule à moteur, comprenant un processeur (1), une commande de circuit de déclenchement (2) et des étages finaux (5, 7) pour chaque moyen de déclenchement (6), la commande de circuit de déclenchement (2) ayant des moyens (13) pour l'exploitation des ordres de commande et des moyens (16, 17) pour assurer le fonctionnement des étages finaux (5, 7), une réserve d'énergie (8) existant pour assurer le fonctionnement des circuits de déclenchement (6) qui présentent les étages finaux (5, 7), les moyens de déclenchement (6), le processeur (1) libérant les étages finaux (5, 7) pour déclencher les moyens de retenue en cas de collision du véhicule à moteur,
    **caractérisé en ce qu'**
    un circuit intégré de sécurité (40) libère les étages finaux (5, 7) en cas de collision, le circuit intégré de sécurité (40) possédant des moyens d'identification de collision, la commande des circuits de déclenchement (2) comprenant des moyens (18) pour mesurer des courants de déclenchement, des moyens (13) pour traiter des défauts des ordres de commande, des moyens (20) pour mesurer la tension de réserve d'énergie et pour la commutation entre la marche par impulsions et la marche continue des étages finaux (5, 7), et chaque fois une entrée de verrouillage (3, 4) pour la libération des étages finaux (5, 7), le circuit intégré de sécurité (40) enclenchant les entrées de verrouillage (3, 4) après la mise en service du dispositif.

2.  Dispositif selon la revendication 1,
    **caractérisé en ce que**
    les moyens (18) mesurant des courants de déclenchement enregistrent un courant d'une source de courant dans un étage final à impulsions correspondant (5) et stockent un résultat de mesure dans un registre de courant de déclenchement (11), le résultat de la mesure pouvant alors être transféré dans un enregistreur d'accidents (12).

3.  Dispositif selon la revendication 2,
    **caractérisé en ce que**
    les moyens (18) pour la mesure des courants de déclenchement combinent logiquement un courant de référence d'une source de courant régulée de l'étage final (5) et une information de réglage, pour déterminer si le courant de déclenchement existe.

4.  Dispositif selon la revendication 1, 2 ou 3,
    **caractérisé en ce que**
    les moyens (13) pour le traitement des défauts des ordres de commande sont conçus pour transmettre une signalisation de défaut au processeur (1) lorsqu'un ordre de commande est identifié comme faux.

5.  Dispositif selon la revendication 3 ou 4,
    **caractérisé en ce que**
    le processeur (1), pour la saisie de l'énergie de déclenchement, utilise le résultat de mesure du registre de courant de déclenchement (11) pour déterminer l'énergie de déclenchement et le processeur (1) coupe les étages finaux (5, 7) au moyen de la commande des circuits de déclenchement (2), quand une valeur prédéterminée de l'énergie de déclenchement est atteinte.

6.  Dispositif selon l'une des revendications précédentes,
    **caractérisé en ce que**
    les moyens (20) pour la commutation entre la marche par impulsions et la marche continue enregistrent la tension de la réserve d'énergie (8) et la comparent à une valeur seuil, et ces moyens commutent sur la marche par impulsions en cas de dépassement de la valeur de seuil, et dans le cas contraire sur la marche continue.

**7.** Dispositif selon l'une des revendications précédentes,
**caractérisé en ce que**
le circuit intégré de sécurité (40) verrouille les étages finaux (5, 7) par enclenchement des entrées de verrouillage (3, 4).

**8.** Procédé pour la commande de circuits de déclenchement de moyens de retenue, dans lequel les étages finaux (5, 7) possèdent des transistors, les circuits de déclenchement étant commandés par un processeur (1) par l'intermédiaire d'une commande de circuits de déclenchement (2),
**caractérisé en ce que**
pour la commande du processeur (1), on utilise au moins deux bits comme combinaison de bits pour la commande d'un transistor, et pour une combinaison de bits inadmissible, on envoie au processeur (1), par la commande des circuits de déclenchement (2), une signalisation de défaut, un étage final (5, 7) étant activé par la succession d'étapes suivantes : d'abord, les entrées de verrouillage (3, 4) de la commande des circuits de déclenchement (2) pour les étages finaux (5, 7) sont réglées par le circuit intégré de sécurité (40) à un niveau de tension prédéterminé, ensuite un ordre de libération est envoyé par le processeur (1) à chaque fois pour le bloc fonctionnel (16, 17), et enfin la commande des circuits de déclenchement reçoit du processeur (1) la combinaison de bits pour la commande des étages finaux (5,7).

**9.** Procédé selon la revendication 8,
**caractérisé en ce que**
si l'ordre de succession n'est pas respecté, il en résulte une interruption automatique de l'activation des étages finaux (5, 7).

Fig. 1

Fig. 2

Fig. 3